# EUROPEAN PATENT SPECIFICATION

(11) **EP 0 692 691 B1**
(45) Date of publication and mention of the grant of the patent: **05.01.2000**
(21) Application number: 95304699.2
(22) Date of filing: 05.07.1995
(51) Int. Cl.: F28D 1/053, B23P 15/26

(54) **Heat exchanger comprising stacked flat pipes and method of producing same**
Wärmetauscher mit gestapelten Flachrohren und Verfahren zu seiner Herstellung
Echangeur de chaleur comprenant des tubes plats empilés et procédé pour sa fabrication

(30) Priority: 12.07.1994 SE 9402473
(43) Date of publication of application: 17.01.1996
(73) Proprietor: Valeo Engine Cooling AB, 294 02 Sölvesborg (SE)
(72) Inventor: Dahl, Erik, SE-294 77 Sölvesborg (SE)
(74) Representative: Neobard, William John

(56) References cited:
- EP-A- 0 106 479
- EP-A- 0 444 595
- WO-A-92/08090
- GB-A- 567 421
- GB-A- 827 060
- US-A- 5 121 790

## Description

The invention relates to a heat exchanger comprising the features of the preamble of claim 1. Such a heat exchanger is disclosed, for example, in US-A- 5 121 790. The invention also relates to a method for producing such a heat exchanger.

A heat exchanger can, for example, constitute an oil cooler in a vehicle for cooling transmission oil, engine oil or hydraulic oil, which is used for hydraulically driven components in the vehicle. Such an oil cooler is placed in the tank forming part of a vehicle radiator, for the purpose of using the liquid in the vehicle radiator as a cooling medium for the oil.

Oil coolers for high-performance and medium performance engines must cool a considerable amount of heat. Since vehicle radiators today are made smaller and more compact, there are stringent requirements that the oil cooler which is to be placed in the increasingly smaller vehicle radiator tank is designed to be as efficient as possible.

A conventional oil cooler of this type which itself has a high cooling performance is shown in SE-B-462, 059 (corresponding to US-A- 5 121 790). This Swedish patent specification shows a heat exchanger for insertion in a tank forming part of a vehicle radiator. The heat exchanger has a heat exchanger stack which consists of a number of flat pipes which are stacked one on top of the other and which each have an upper pipe half and a lower pipe half, the edge portions of which bear sealingly against each other. The upper pipe halves are provided with a downwardly bent, circumferential edge flange, and the lower pipe halves are provided with an upwardly bent, circumferential edge flange, said edge flanges forming a lap joint. The pipes furthermore have holes formed at their respective end portions, on the one hand for leading fluid into and out of the heat exchanger and on the other hand for distributing fluid to, and collecting fluid from, the stacked pipes. The holes of the pipes are furthermore provided with collars for distancing the pipes from each other, for the purpose of receiving outer surface-increasing elements arranged between the pipes.

The construction described above has a good cooling capacity, but it is in other respects associated with a number of disadvantages. Each pipe consists, as has been mentioned above, of two pipe halves which are connected to each other by means of hard soldering. The soldered seams are long, and there is therefore a considerable risk of the connection between the pipe halves becoming untight somewhere along the pipe. It will be appreciated that this is serious, since water then mixes with oil.

The pipe halves are not interchangeable, which means that assembling the heat exchanger is time-consuming because the parts involved have to be sorted out and stacked in a particular manner for the heat exchanger to be given the desired shape.

The production of the pipe halves is also expensive because they are shaped, by means of pressing, using expensive tools in several stages. Since the pipe halves have different dimensions, twice the number of tools are also needed.

Two other documents are known, each disclosing end closures for closing the end of full pipes, these documents being EP-A-0106479 and WO-A-92/08090. The end closures in both cases are plates with channel-shaped depressions.

There is therefore a need for a solution which is an improvement on the construction described above.

One object of the invention is to produce a heat exchanger and specify a method for producing same, which heat exchanger will be simple and cost-effective to manufacture and at the same time have a high cooling capacity.

Another object of the invention is to produce a heat exchanger which, while retaining the high cooling capacity, involves less risk of leakage compared with the prior art.

A particular object of the invention is to produce a heat exchanger in which the joining together of the parts included in the heat exchanger is made easier.

According to a first aspect of the present invention there is provided a heat exchanger comprising a heat exchanger stack which consists of a number of flat pipes which are stacked one on top of the other and are of substantially rectangular cross section, outer surface-increasing means arranged between the pipes and inner surface-increasing means arranged inside the pipes;
a fluid inlet which is formed by a hole at a first end portion of either one of the uppermost or the lowermost pipe; a fluid outlet which is formed by a hole at a second end portion, situated opposite the fluid inlet, of either one of the uppermost or the lowermost pipe; an inlet distribution channel for distributing fluid between the stacked pipes and an outlet collection channel for collecting the fluid from the stacked pipes, the inlet distribution and outlet collection channels being formed by holes at said first and second end portions of the pipes, which holes are arranged in pairs in line with each other, and with the edges of holes situated adjacent to each other being connected tightly to each other; and an attachment member which is arranged in the inlet and outlet; wherein the end portions of the respective pipe are wider in the stacking direction in relation to the remaining part of the pipe; the stacked pipes bear against, and are connected to, each other along their widened end portions, the pipes being situated, along the remaining part of their length, at a distance from each other for the purpose of receiving the outer surface-increasing means; and at least those parts of said end portions which constitute a bearing surface for a neighboring pipe are plane;
characterised in that said pipes are full pipes having end apertures and cup-shaped end closures are inserted into said end apertures, with their apertures directed outward from the end apertures of the pipe, whereby the pipe apertures are closed.

According to a second aspect or the present invention there is provided a method for producing a heat exchanger comprising a heat exchanger stack which consists of a number of flat pipes which are stacked one on top of the other, outer surface-increasing means arranged between the pipes, the pipes having end apertures; a fluid inlet which is formed by a hole at a first end portion of either one of the uppermost or the lowermost pipe; a fluid outlet which is formed by a hole at a second end portion, situated opposite the fluid inlet, of either one of the uppermost or the lowermost pipe; an inlet distribution channel for distributing fluid between the stacked pipes, and an outlet collection channel for collecting the fluid from the stacked pipes, the inlet distribution channel and outlet collection channel being formed by holes at said first and second end portions of the pipes, which holes are arranged in pairs in line with each other, and with the edges of holes situated adjacent to each other being conencted tightly to each other; and an attachment member which is arranged in the inlet and outlet, said method comprising the following measures: widening the end portions of the pipes in the stacking direction, each end portion being given an upper plane portion and a lower plane portion; punching out the hole for forming the fluid inlet in the upper or the lower plane portion of said first end portion, and punching out the hole for forming the fluid outlet in the upper or the lower plane portion of said second end portion; punching out the holes for forming the inlet distribution channel and outlet collection channel in the upper and lower plane portions of the end portions of the pipes; inserting closure members into the end pipe end apertures; wherein the closure member is produced by means of a flat end closure blank being squeezed by a press tool into a through-channel in a shaping member and in this way being shaped into a cup-shaped end closure (20), and wherein the cup-shaped end closure is then pushed further through the channel and into the end portion of the pipe through its end aperture, which pipe is situated inserted in the through-channel of the shaping member stacking the pipes one on top of the other so that the end portions of two neighbouring pipes bear against each other via their respective plane portions; placing the outer surface-increasing means between the pipes; arranging the attachment member at the fluid inlet and the fluid outlet; fixing the components included in the heat exchanger to each other; and connecting said components to each other by means of hard-soldering.

Features of the embodiments are specified in the subordinate patent claims.

The invention affords a number of important advantages over the previously disclosed heat exchanger described above. The design of the pipes included in the heat exchanger stack as flat full pipes with shaped end portions means that the pipes can be manufactured by the meter and then cut to the desired length prior to shaping of the end portions. This leads to bigger production series and, consequently, to more cost-effective production.

The fact that the pipes consist of full pipes also means of course that the pipes have a single wall even along their longitudinal sides, in contrast to the conventional heat exchanger described above which has a double wall along its longitudinal sides in the form of a lap seam. The pipes according to the invention can therefore provide space for, in relative terms, a wider inner surface-increasing arrangement, which results in better overall heat transfer between the oil inside the pipe and the liquid mixture flowing outside it. The fact too that the pipe wall is thinner in itself means that the heat transfer is improved.

The invention also dispenses with the need to use upper and lower pipe halves which have to be placed in a certain manner in order to form the heat exchanger stack.

The design of the pipes also makes it possible to arrange an outer surface-increasing means on the outside of the uppermost pipe and lowermost pipe and still retain an imaginary straight line from the one attachment member to the other via the outer surface-increasing means, or from a first outer reinforcement plate to a second reinforcement plate via the outer surface-increasing means. Such an imaginary straight line is important when fixing the complete heat exchanger before a subsequent soldering operation.

Embodiments of the invention will now be described with reference to the attached drawings, in which
Figure 1 is a side view of an oil cooler according to the invention, already mounted, and shown partially in section;
Figure 2 is a plan view of the one end portion of the oil cooler according to the invention;
Figure 3 is a view which shows the cross section of the shaped end portion of a pipe included in an oil cooler according to the invention;
Figure 4 is a view which shows the cross section of the remaining part of a pipe included in an oil cooler according to the invention;
Figures 5 and 6 are diagrammatic side views, partially in section, which show the insertion of the inner surface-increasing means into the pipe;
Figure 7 is a view from the side, partially in section, which shows the shaping of the end portions of the pipes;
Figure 8 is a front view, partially in section, which shows the shaping of the end portions of the pipes;
Figures 9a-c show the punching-out of a first, upper hole at the end portions of the pipes;
Figures 10a-c show the punching-out of a second, lower hole at the end portions of the pipes;
Figures 11a-c show the flanging of the second, lower hole;
Figure 12 shows a part of an aluminum sheet with two end closure blanks for closing the ends of the pipes;
Figure 13 is a diagrammatic side view, partially in section, of an apparatus for closing the ends of the pipes;
Figure 14a is a front view of a finished end closure;
Figure 14b is a sectional view which shows the cross section of the end closure from the side; and
Figure 15 is a sectional view of the uppermost or lowermost pipe in the heat exchanger stack according to an alternative embodiment of the invention.

In the drawings, like reference numerals refer to like parts.

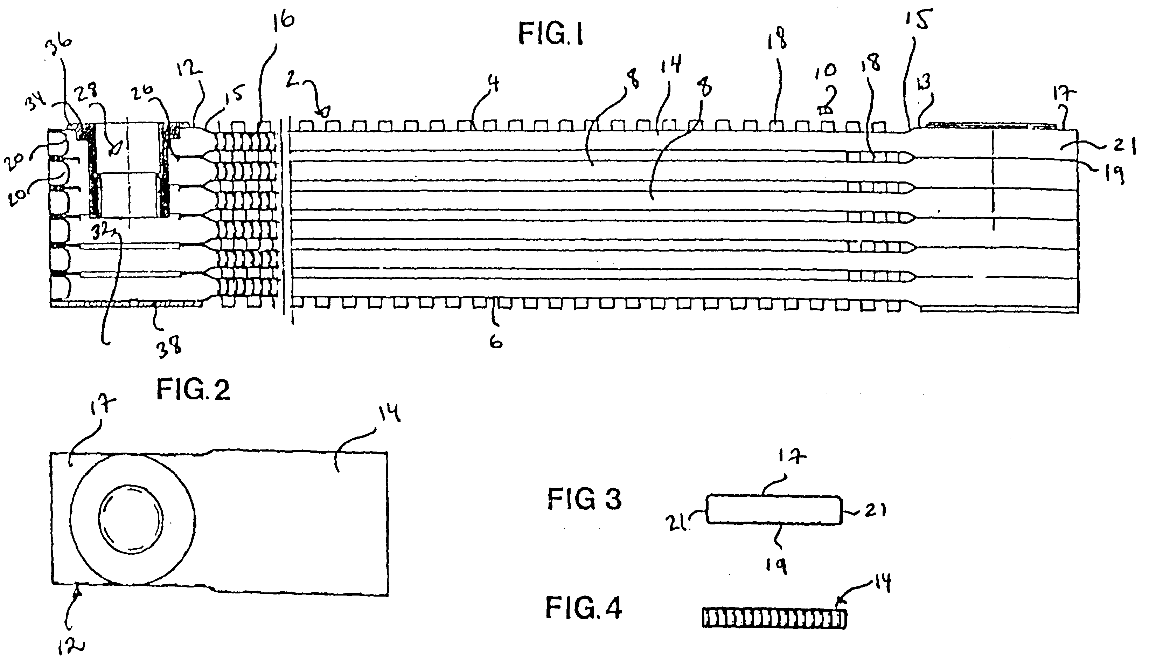

Figure 1 shows an oil cooler according to the invention, which has a heat exchanger stack 2 which consists of an uppermost flat pipe 4, a lowermost flat pipe 6 and a number of flat intermediate pipes 8, which pipes are stacked one on top of the other in order to form a pipe stack 10. Each pipe has a first end portion 12 and a second end portion 13, which are situated opposite each other, and a remaining portion or middle portion 14. The middle portion 14 merges into each respective end portion 12, 13 via a conical transition portion 15 for obtaining a gentle change of shape. The two end portions 12, 13 have a plane top side 17, a plane underside 19 and two plane edge sides 21 for forming a rectangular cross section of each end portion 12, 13. The middle portion 14 of the pipe also has a rectangular cross section, but the cross section of the end portions 12, 13 differs from the cross section of the middle portion in that the cross section of the end portions 12, 13 is widened in the stacking direction of the pipes. The cross section of the end portions 12, 13 in this case has a height which exceeds the height of the middle portion 14 of the pipe and a width which is smaller than the width of the middle portion of the pipe, as is evident from Figures 3 and 4.

The heat exchanger stack 2 furthermore has inner surface-increasing means 16 for increasing the heat transfer capacity, which means are arranged inside each pipe 4, 6, 8 and extend in the longitudinal direction of the pipe along essentially the whole of the middle portion 14 of the pipe.

The pipes bear against, and are connected to, each other along their end portions 12, 13 in a manner which will be described below, and this means that the pipes, along their middle portions 14, are situated at a distance from one another in the stacking direction.

The heat exchanger stack 2 furthermore comprises outer surface-increasing means 18 for increasing the heat transfer capacity, which means are, on the one hand, arranged between and connected to the pipes, and, on the other hand, are arranged on the outside of and connected to the top side of the uppermost pipe 4 and the underside of the lowermost pipe 6. The outer surface-increasing means 18 extend over essentially the whole of the middle portions 14 of the pipes. The pipes 4, 6, 8 are furthermore closed at their end apertures by means of closure members in the form of cup-shaped or box-shaped end closures 20 which, with their apertures directed outward from the end aperture of the pipe, are pushed into said end aperture. The cup-shaped end closure 20 in this case bears, along its sides, against the inside of the pipe, which permits a long solder seam.

The uppermost pipe 4 and the intermediate pipes 8 each have an upper hole 22 formed in the top side of the end portions 12, 13 of the respective pipe, and a lower hole 24 formed in the underside of the end portions 12, 13 of the respective pipe. The upper and lower holes 22, 24 of each pipe are situated in line with each other, and the pipes are stacked one on top of the other in such a way that the holes of two pipes situated adjacent to each other are also situated in line with each other. Along its periphery, the lower hole is provided with a circumferential flange 26 which extends substantially at right angles out from the plane of the hole 24 and down into the upper hole 22 of the neighboring pipe. The flange 26 of the lower hole 24 in this case engages with the edge of said upper hole 22 for guiding two adjacent pipes into each other and for fixing the pipes to each other.

At its two end portions 12, 13, the lowermost pipe 6 has only an upper hole 22, which is situated in line with the lower hole 24 of the lowermost of the intermediate pipes.

The upper hole 22 at the first end portion 12 of the uppermost pipe 4 forms a fluid inlet 28, and the upper hole 22 at the second end portion 13 of the uppermost pipe forms a fluid outlet 30 (not shown), i.e. the fluid inlet 28 and the fluid outlet 30 are formed in the same pipe. The other holes situated opposite each other at the respective first end portions 12 of the pipes form an inlet distribution channel 32 for distributing fluid between the stacked pipes, while the other holes situated opposite each other at the respective second end portions 13 of the pipes form an outlet collection channel (not shown) for collecting fluid from the stacked pipes.

An attachment member in the form of a bushing 34 is introduced into both the inlet and outlet 28, 30, one end of said bushing 34 being provided with an annular flange 36 which is connected to the outside of the respective first and second end portion 12, 13 of the uppermost pipe 4. The bushing 34 extends into the inlet distribution channel 32 and outlet collection channel, and its other end is arranged in the respective channel 32. The bushing 34 is intended to receive an oil nipple (not shown) through which the oil flows.

A reinforcement plate 38 is arranged, by means of riveting, on the outside of the underside of the first and second end portions 12, 13 of the lowermost pipe. Said plate is intended to strengthen said underside against compressive loads.

An alternative to the reinforcement plate 38 is to shape the underside of the lowermost pipe, at the first and second end portions, so that it is curved slightly inward, this also providing greater resistance to compressive loads. An example of a pipe with such a curved underside is shown in Figure 15. It should be noted that it is of course also possible to place the reinforcement plate 38 on the inside of the end portions 12, 13.

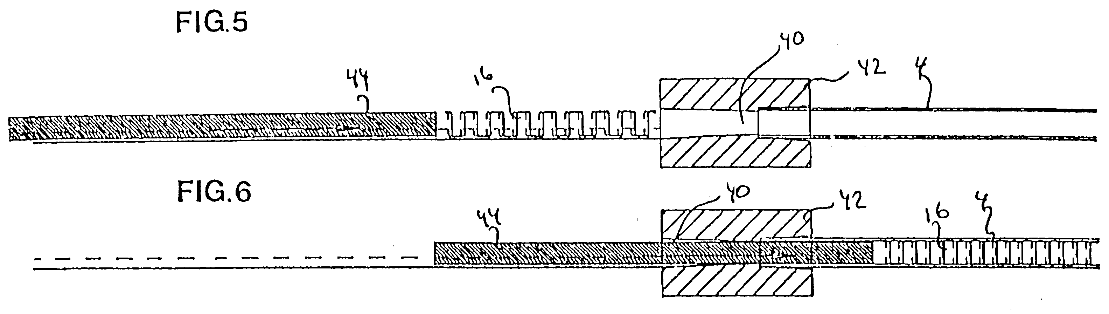

The production of an oil cooler according to the invention will now be described with reference first to Figures 5 to 14.

The flat aluminum pipes 4, 6, 8 included in the heat exchanger stack are in the first instance cut to the desired length, after which one end of each pipe is placed in a channel 40 in a holding member 42. The inner surface-increasing means is pushed into the pipe 4, 6, 8, by means of a rod 44, via the channel 40 of the holding member 42, which functions as a guide. The channel 40 is conically tapered, which means that the inner surface-increasing means 16 is pressed together slightly in the vertical direction before being pushed into the pipe. The introduction of the inner surface-increasing means 16 into the pipe is shown in Figures 5 and 6.

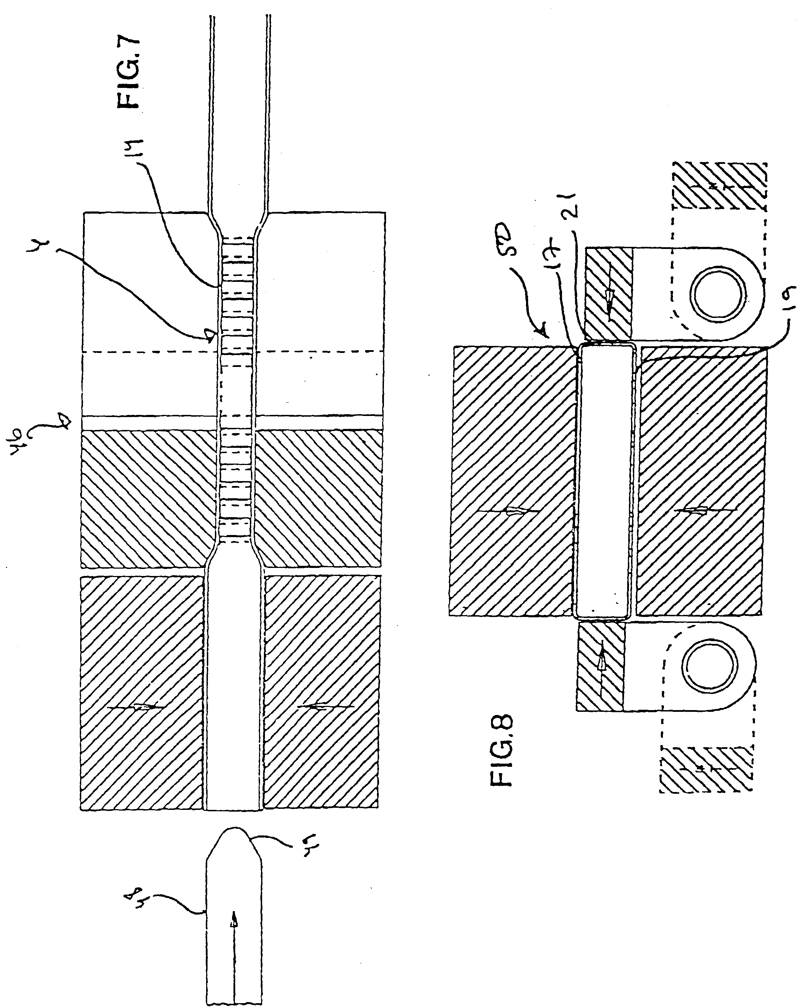

It can be seen from Figure 7 that the pipe 4, 6, 8 is then placed in a securing member 46 which is adjustable in the longitudinal direction and which secures the pipe 4, 6, 8 along its middle portion 14 by means of pressing against the top side and underside of the pipe. The widening of the first and second end portions 12, 13 of the pipe, in the stacking direction of the pipes, is obtained, during securing of the pipe, by virtue of the fact that a mandrel 48 of substantially rectangular cross section and with a convex front end 49 is introduced into the respective end portion of the pipe, the cross section being made taller and narrower than the cross section of the middle portion of the pipe. The convex front end 49 of the mandrel provides for the desired gentle change of shape from the middle portion 14 to each end portion 12, 13, which change of shape forms the conical transition portion 15. While the mandrel 48 is still inserted in the now widened end portion 12, 13, said end portion is squeezed substantially straight inward by means of a squeezing member 50, shown in Figure 8, from above, from below and from the sides in order to obtain as rectangular as possible a cross section, i.e. an end portion 12, 13 which has corners of as small a radius as possible. The mandrel 48 functions here as a counterstay.

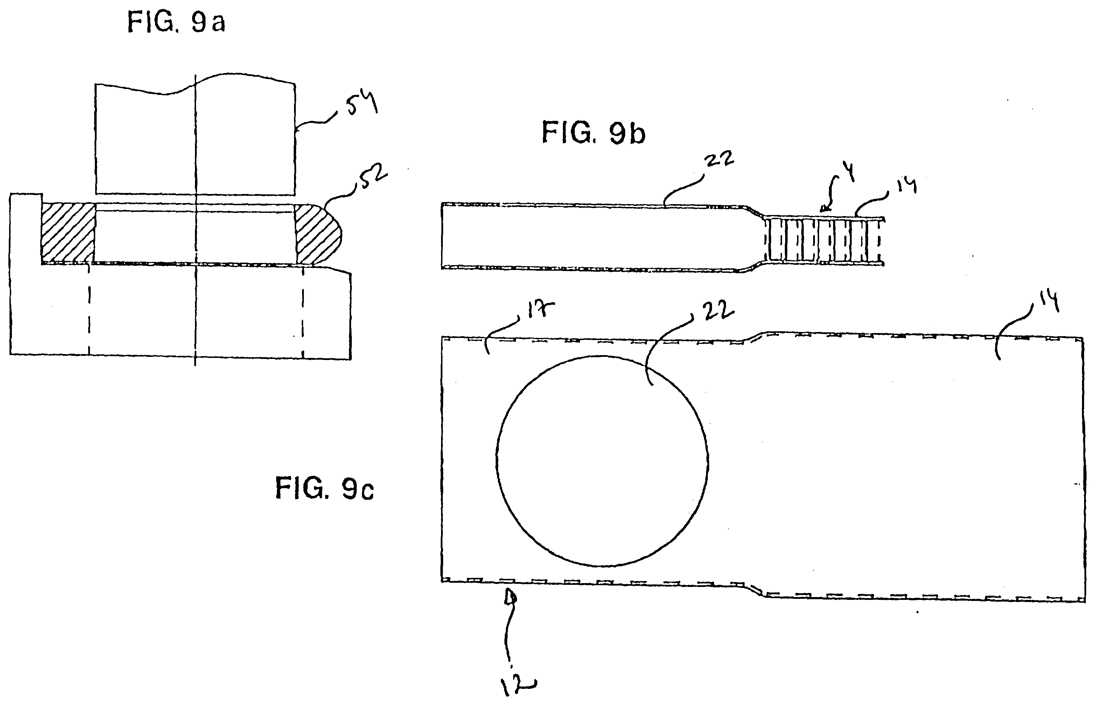

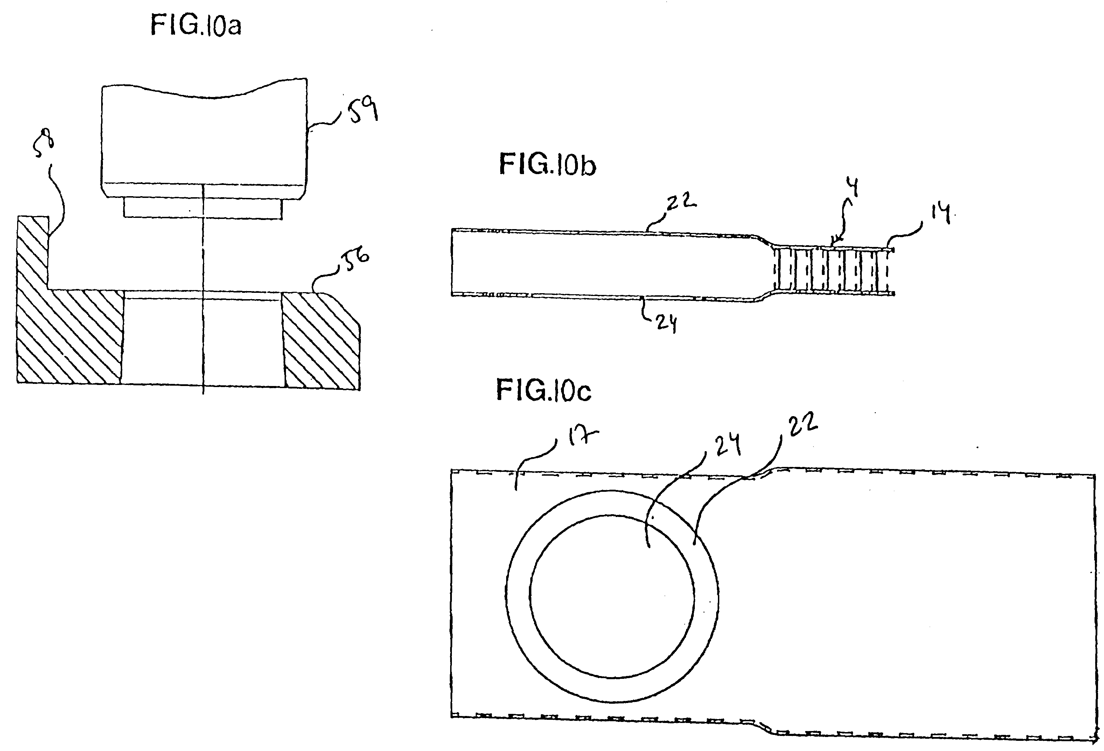

Figures 9 and 10 show how the holes are formed in the respective end portions 12, 13 of the pipe. The end portion 12, 13 of a pipe shown in Figure 9b is pushed over a mandrel 52, shown in Figure 9a, for supporting the end portion 12, 13. The upper hole 22 in the end portion 12, 13 is then punched out from the top side of the end portion 12, 13 by means of a first punch 54, the mandrel 52 in this respect also functioning as a die.

The uppermost pipe 4 and the intermediate pipes 8 are then each moved to a first die 56 and are placed bearing against an edge surface 58, connected to the die 56, for positional setting of the pipe 4, 8. The lower hole 24 at the end portion 12, 13 of the respective pipe 4, 8 is then punched out by means of another punch 59, the upper hole 22 guiding the punch 59 to the correct position. The positions of the holes relative to each other are clearly evident from Figures 10b and c.

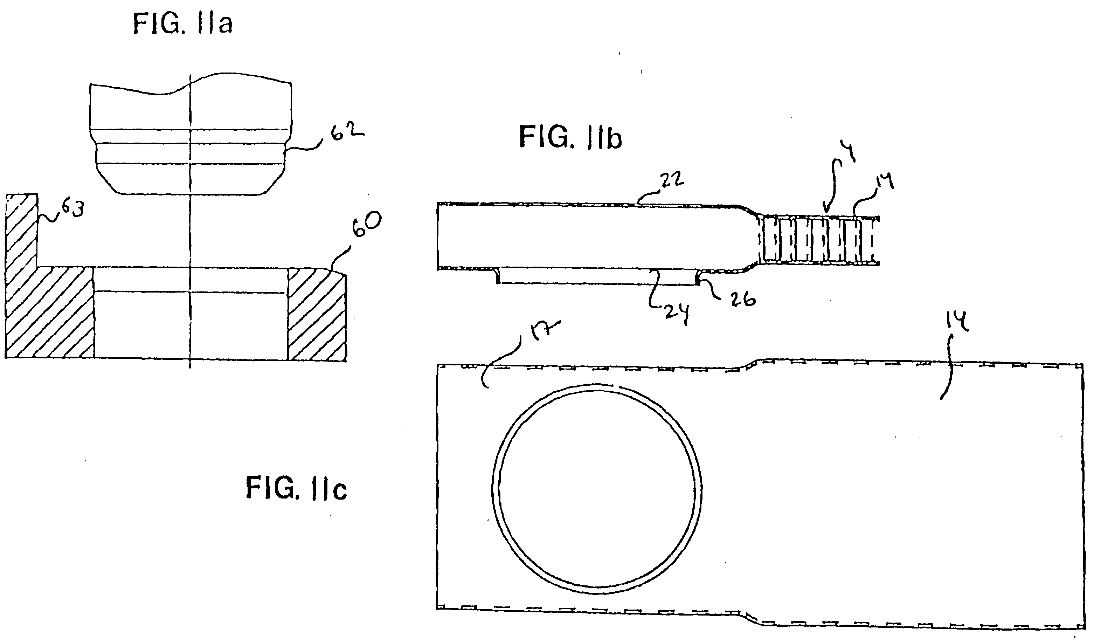

After the two holes have been punched out at the end portions 12, 13 of the pipe, each pipe 4, 8 is moved to a second die 60 where the lower hole 24 is flanged or is provided with the flange 26, as is evident from Figures 11a to c. The flange 26 is obtained by means of a press tool 62 being guided down through the upper hole 22 and pressing the outermost edge portion of the lower hole 24 downward substantially at right angles in relation to the plane of the hole. Here too an edge surface 63 is used for setting the position of the pipe.

After its upper hole 24 has been punched out, the lowermost pipe 6 is provided with the reinforcement plate 38, by means of the latter being riveted securely on the outside of the underside of both end portions 12, 13 of the lowermost pipe 6, as is evident from Figure 1.

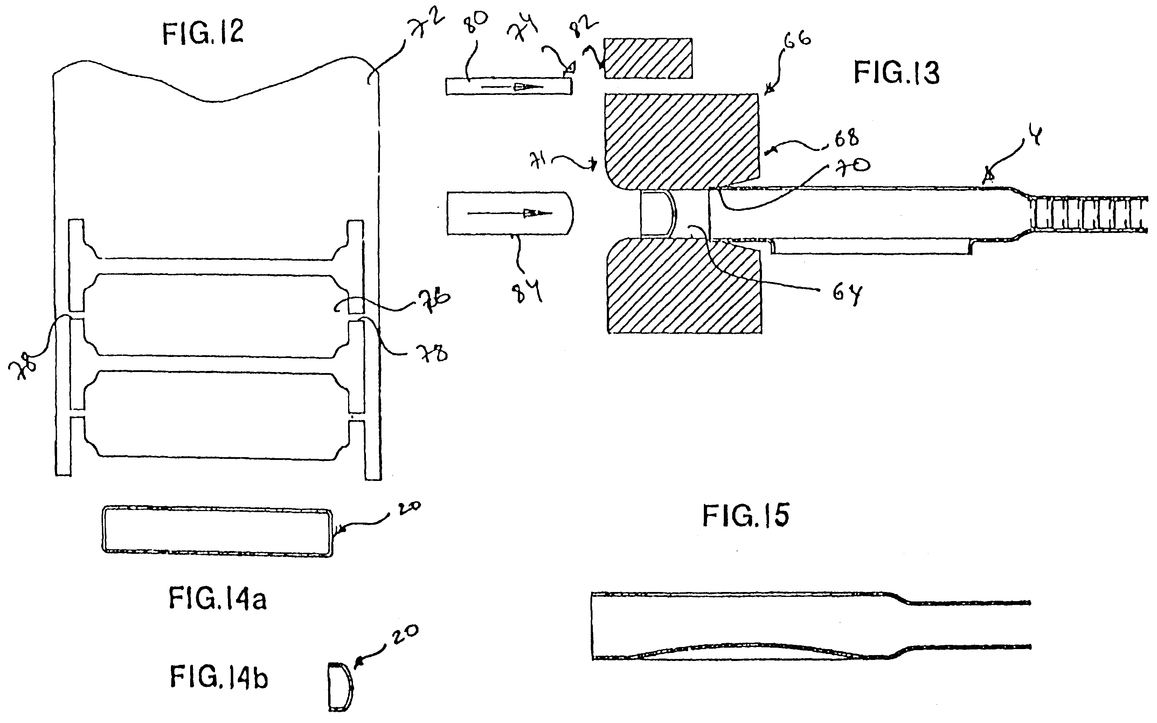

The end apertures of all the pipes 4, 6, 8 are then closed in a manner which is shown in Figures 12 to 14. One end portion 12, 13 of the pipe 4, 6, 8 is pushed into a through-channel 64 in a shaping member or a frame 66 from a rear side 68 of the frame 66 until it bears against a shoulder 70 which is formed in the channel and which has a width exceeding the wall thickness of the pipe. The channel is slightly conical in the direction toward the rear side 68 so as to facilitate insertion. A flat aluminum tape 72 is fed along a front side 71 of the frame 66, which front side 71 is situated opposite the rear side 68, aluminum tape material being punched out from said aluminum tape 72 by means of a punch member 74 in order to form a flat end closure blank 76 which is connected to the aluminum tape by means of two thin material strips 78. The punch member consists of a punch 80 and of a die 82 connected to the frame. The aluminum tape 72, and thus the end closure blank 76, is then advanced further along the front side 71 of the frame 66 until the blank 76 is situated in front of the through-channel 64 in the frame 66. A press tool 84 executing a reciprocal motion then presses the flat end closure blank 76 into the channel 64 from the front side 71, which blank is in this way shaped to give the cup-shaped or box-shaped end closure 20. The end closure 20 is then pushed further through the channel 64 until its side edges bear against the shoulder 70, this being made possible by virtue of the fact that the side edges snap into the shoulder, as a result of which the end closure 20 is situated inside the end portion 12, 13 of the pipe and closes the end aperture thereof. In this way the end closure is prevented from following the press tool when the latter is pulled back out of the channel 64.

The stacking of the pipes 4, 6, 8 begins with the outer surface-increasing means 18 situated on the outside of the lowermost pipe being placed on a fastening plate (not shown). The pipes are then stacked one on top of the other, with the outer surface-increasing means 18 placed between them, so that the end portions of the pipes bear against each other, and the holes 22, 24 are situated in line with each other, this being facilitated by means of the flanges 26. The bushing is placed in the fluid inlet 28 and fluid outlet 30. Finally, the whole oil cooler is mounted in a fixture, after which the whole cooler is placed in a vacuum furnace, and the parts included are connected to each other by means of hard soldering.

All parts included in the cooler are made of an aluminum alloy, and the soldering is effected by means of an outer aluminum layer melting and forming a solder.

The invention can be modified in a number of ways within the scope of protection defined in the independent patent claims. The attachment members or the bushing may, for example, be arranged in different pipes, and the widening of the end portions of the pipes can be obtained without the subsequent squeezing. The cooler can also be made of a material other than aluminum.

Although the heat exchanger described above is placed in a tank included in a vehicle radiator, the invention shall not be regarded as being limited thereto. It is in fact also possible to use air as the cooling medium instead of water.

The attachment member does not have to be introduced into the inlet and outlet, and can instead be arranged on the outside of the pipe projecting from the inlet and outlet.

## Claims

1. A heat exchanger comprising
a heat exchanger stack (2) which consists of a number of flat pipes (4, 6, 8) which are stacked one on top of the other and are of substantially rectangular cross section, outer surface-increasing means (18) arranged between the pipes and inner surface-increasing means (16) arranged inside the pipes;
a fluid inlet (28) which is formed by a hole (22, 24) at a first end portion (12) of either one of the uppermost or the lowermost pipe (4, 6);
a fluid outlet (30) which is formed by a hole (22, 24) at a second end portion (13), situated oppcsite the fluid inlet (28), of either one of the uppermost or the lowermost pipe (4, 6);
an inlet distribution channel (32) for distributing fluid between the stacked pipes (4, 6, 8), and an outlet collection channel for collecting the fluid from the stacked pipes, the inlet distribution and outlet collection channels being formed by holes (22, 24) at said first and second end portions (12, 13) of the pipes, which holes are arranged in pairs in line with each other, and with the edges of holes situated adjacent to each other being connected tightly to each other; and
an attachment member (34) which is arranged in the inlet (28) and outlet (30);
wherein
the end portions (12, 13) of the respective pipe (4, 6, 8) are wider in the stacking direction in relation to the remaining part of the pipe;
the stacked pipes bear against, and are connected to, each other along their widened end portions (12, 13), the pipes being situated, along the remaining part of their length, at a distance from each other for the purpose of receiving the outer surface-increasing means (18); and
at least those parts (17, 19) of said end portions (12, 13) which constitute a bearing surface for a neighboring pipe are plane;
characterised in that said pipes are full pipes having end apertures and cup-shaped end closures (20) are inserted into said end apertures with their apertures directed outward from the end aperture of the pipe whereby the end apertures are closed.

2. The heat exchanger as claimed in claim 1, wherein the holes (22, 24) situated in line with each other for forming the inlet distribution channel (32) and the outlet collection channel are formed in the plane portions (17, 19) of said end portions (12, 13).

3. The heat exchanger as claimed in claim 1 or 2, wherein the widened end portions (12, 13) of at least those pipes (8) which are situated inside the pipe stack have a substantially rectangular cross section with a height which exceeds the height of the remaining part of the pipe, and a width which is smaller than the width of the remaining part of the pipe.

4. The heat exchanger as claimed in any one of claims 1 to 3, wherein one of the holes (22, 24) situated in line with each other at said end portions (12, 13) has a circumferential flange (26) which extends substantially radially outward from the hole for guiding into, and fixing to, the second of the holes (22, 24) situated in line with each other.

5. The heat exchanger as claimed in any one of claims 1 to 4, wherein a reinforcement plate (38) is arranged on the outside of a first end portion (12) of the other of the uppermost or the lowermost pipe (4, 6) and on the outside of a second portion (13) of the other of the uppermost or the lowermost pipe (4, 6), which plates (38) are situated opposite the fluid inlet (28) and fluid outlet (30), respectively.

6. The heat exchanger as claimed in any one of claims 1 to 5, wherein the fluid inlet (28) and the fluid outlet (30) are situated in the same pipe (4, 6).

7. The heat exchanger as claimed in any one of claims 1 to 6, wherein said outer surface-increasing means (18) are also arranged on top of and under the remaining part (14) of the respective uppermost and lowermost pipe (4, 6).

8. The heat exchanger as claimed in any one of claims 1 to 7, wherein the attachment member (34) is introduced into the respective inlet (28) and outlet (30), and wherein one end of same is provided with an annular flange (36) which is connected to the outside (17, 19) of the first or second end portion (12, 13) of the uppermost or the lowermost pipe (4, 6), and its other end is arranged in the inlet distribution channel (32) and outlet collection channel.

9. A method for producing a heat exchanger comprising
a heat exchanger stack (2) which consists of a number of flat pipes (4, 6, 8) which are stacked one on top of the other, outer surface-increasing means (18) arranged between the pipes, the pipes having end apertures;
a fluid inlet (28) which is formed by a hole (22, 24) at a first end portion (12) of either one of the uppermost or the lowermost pipe (4, 6);
a fluid outlet (30) which is formed by a hole (22, 24) at a second end portion (13), situated opposite the fluid inlet (28), of either one of the uppermost or the lowermost pipe (4, 6);
an inlet distribution channel (32) for distributing fluid between the stacked pipes, and an outlet collection channel (33) for collecting the fluid from the stacked pipes, the inlet distribution channel (32) and outlet collection channel (33) being formed by holes (22, 24) at said first and second end portions (12, 13) of the pipes, which holes (22, 24) are arranged in pairs in line with each other, and with the edges of holes situated adjacent to each other being connected tightly to each other; and
an attachment member (34) which is arranged in the inlet (28) and outlet (30), said method comprising the following measures:
widening the end portions (12, 13) of the pipes in the stacking direction, each end portion (12,13) being given an upper plane portion (17) and a lower plane portion (19);
punching out the hole (22, 24) for forming the fluid inlet (28) in the upper or the lower plane portion (17, 19) of said first end portion (12), and punching out the hole for forming the fluid outlet (30) in the upper or the lower plane portion (17, 19) of said second end portion (13);
punching out the holes (22, 24) for forming the inlet distribution channel (32) and outlet collection channel (33) in the upper and lower plane portions (17, 19) of the end portions (12, 13) of the pipes;
inserting closure members (20) into the end pipe end apertures;
wherein the closure member (20) is produced by means of a flat end closure blank (76) being squeezed by a press tool (84) into a through-channel (64) in a shaping member (66) and in this way being shaped into a cup-shaped end closure (20), and wherein the cup-shaped end closure is then pushed further through the channel (64) and into the end portion (12, 13) of the pipe through its end aperture, which pipe is situated inserted in the through-channel of the shaping member (66);
stacking the pipes one on top of the other so that the end portions (12, 13) of two neighbouring pipes bear against each other via their respective plane portions (17, 19);
placing the outer surface-increasing means (18) between the pipes;
arranging the attachment member (34) at the fluid inlet (28) and the fluid outlet (30);
fixing the components included in the heat exchanger to each other; and
connecting said components to each other by means of hard-soldering.

10. The method as claimed in claim 9, wherein the widening of the end portions (12, 13) of the pipes is effected by means of a mandrel (48) being pushed into the end aperture of the pipe by a length which corresponds to the desired length of the end portion (12, 13), while a securing member (46) holds the pipe secure at its middle portion (14).

11. The method as claimed in claim 10, wherein the end portion (12, 13) is then shaped into a substantially rectangular cross section by means of the fact that said end portion, while the mandrel (48) is still inserted therein, is squeezed inward simultaneously from above, from underneath and from both sides, said mandrel (48) functioning as a counterstay during said squeezing-in of the end portion (12, 13).

12. The method as claimed in any one of claims 9 to 11, wherein the end portion (12, 13) is shaped into a rectangular cross section with a height which exceeds the height of the remaining part of the pipe, and a width which is smaller than the width of the remaining part of the pipe.

13. The method as claimed in any one of claims 11 to 14, wherein the punching of a first of the two holes at each end portion for forming the inlet distribution channel (32) and the outlet collection channel is carried out with the end portion (12, 13) of the pipe placed over a mandrel (52) for supporting same, and wherein said first hole functions as a guide for punching out said second hole (22, 24).

14. The method as claimed in any one of claims 9 to 13, wherein the one of the two holes (22, 24) formed at the end portions of the pipes for forming the inlet distribution channel (32) and the outlet collection channel (33) is flanged so as to permit guiding and fixing when stacking the pipes one on top of the other.

## Patentansprüche

1. Wärmetauscher umfassend
einen Wärmetauscherblock (2), der eine Reihe von flachen Rohren (4, 6, 8) umfaßt, welche übereinander gestapelt angeordnet sind und einen im wesentlichen rechtwinkligen Querschnitt haben, wobei äußere Oberflächenvergrößerungsmittel (18) zwischen den Rohren und innere Oberflächenvergrößerungsmittel (16) innerhalb der Rohre angeordnet sind;
einen Flüssigkeitszulauf (28), der durch eine Öffnung (22, 24) in einem ersten Endabschnitt (12) des obersten oder des untersten Rohres (4, 6) gebildet wird;
einen Flüssigkeitsablauf (30), der durch eine gegenüber dem Flüssigkeitszulauf (28) angeordnete Öffnung (22, 24) in einem zweiten Endabschnitt (13) des obersten oder des untersten Rohres (4, 6) gebildet wird;
einenZulaufverteilungskanal(32) für das Verteilen der Flüssigkeit zu den gestapelten Rohren (4, 6, 8) und einen Ablaufsammelkanal für das Sammeln der aus den gestapelten Rohren fließenden Flüssigkeit, wobei der Zulaufverteilungskanal und der Ablaufsammelkanal durch Öffnungen (22, 24) in den genannten ersten und zweiten Endabschnitten (12, 13) der Rohre gebildet werden und wobei die Öffnungen paarweise in einer Linie zueinander angeordnet sind und die Kanten von benachbarten Öffnungen dicht miteinander verbunden sind; und
ein Befestigungsglied (34), welches im Zulauf (28) und im Ablauf (30) angeordnet ist;
**dadurch gekennzeichnet, daß**
die Endabschnitte (12, 13) des jeweiligen Rohrs (4, 6, 8) in Stapelrichtung im Verhältnis zum übrigen Teil des Rohrs weiter sind und
die gestapelten Rohre entlang ihrer aufgeweiteten Endabschnitte (12, 13) aneinander anliegen und miteinander verbunden sind und die Rohre über ihre verbleibende Länge voneinander beabstandet angeordnet sind, um die äußeren Oberflächenvergrößerungsmittel (18) aufzunehmen, und
mindestens die Teilstücke (17, 19) der genannten Endabschnitte (12, 12), die eine Lagerfläche für ein benachbartes Rohr bilden, flach sind;
**dadurch gekennzeichnet, daß** die genannten Rohre ganze Rohre sind, in deren Endöffnungen becherförmige Endverschlüsse (20), deren offene Seite von den Endöffnungen des Rohres nach außen weist, eingesetzt werden, wodurch die Endöffnungen geschlossen werden.

2. Wärmetauscher nach Anspruch 1, **dadurch gekennzeichnet, daß** die Öffnungen (22, 24), die in einer Linie zueinander angeordnet sind, um den Zulaufverteilungskanal (32) und den Ablaufsammelkanal zu bilden, in den ebenen Teilstücken (17, 19) der genannten Endabschnitte (12, 13) gebildet werden.

3. Wärmetauscher nach Anspruch 1 oder 2, **dadurch gekennzeichnet, daß** die aufgeweiteten Endabschnitte (12, 13) von mindestens den Rohren (8), die innerhalb des Rohrstapels angeordnet sind, einen im wesentlichen rechtwinkligen Querschnitt haben, dessen Höhe größer ist als die Höhe des übrigen Teils des Rohrs und dessen Weite kleiner ist als die Weite des übrigen Teils des Rohrs.

4. Wärmetauscher nach einem der Ansprüche 1 bis 3, **dadurch gekennzeichnet, daß** eine der genannten Öffnungen (22, 24), die in den genannten Endabschnitten (12, 13) in einer Linie zueinander angeordnet sind, mit einem am Umfang verlaufenden Flansch (26) versehen ist, der sich im wesentlichen radial nach außen aus der Öffnung erstreckt, um als Führung in die zweite der in einer Linie zueinander angeordneten Öffnungen (22, 24) und zur Fixierung dieser gegenüber zu dienen.

5. Wärmetauscher nach einem der Ansprüche 1 bis 4, **dadurch gekennzeichnet, daß** eine Verstärkungsplatte (38) außen an einem ersten Endabschnitt (12) des anderen des obersten oder untersten Rohrs (4, 6) und außen an einem zweiten Endabschnitt (13) des anderen des obersten oder untersten Rohrs (4, 6) angeordnet ist, wobei diese Platten (38) gegenüber dem Flüssigkeitszulauf (28) bzw. dem Flüssigkeitsablauf (30) angeordnet sind.

6. Wärmetauscher nach einem der Ansprüche 1 bis 5, **dadurch gekennzeichnet, daß** der Flüssigkeitszulauf (28) und der Flüssigkeitsablauf (30) in demselben Rohr (4, 6) angeordnet sind.

7. Wärmetauscher nach einem der Ansprüche 1 bis 6, **dadurch gekennzeichnet, daß** die genannten äußeren Oberflächenvergrößerungsmittel (18) ebenfalls oben auf und unter dem übrigen Abschnitt (14) des entsprechenden obersten oder untersten Rohrs (4, 6) angeordnet sind.

8. Wärmetauscher nach einem der Ansprüche 1 bis 7, **dadurch gekennzeichnet, daß** das Befestigungsglied (34) in den entsprechenden Zulauf (28) und Ablauf (30) eingeführt wird und **dadurch gekennzeichnet, daß** ein Ende desselben mit einem ringförmigen Flansch (36) ausgeführt ist, welcher mit der Außenseite (17, 19) des ersten oder zweiten Endabschnitts (12, 13) des obersten oder des untersten Rohrs (4, 6) verbunden ist und dessen anderes Ende im Zulaufverteilungskanal (32) und Ablaufsammelkanal angeordnet ist.

9. Verfahren für die Herstellung eines Wärmetauschers umfassend
einen Wärmetauscherblock (2), der eine Reihe von flachen Rohren (4, 6, 8) umfaßt, welche übereinander gestapelt angeordnet sind und zwischen denen äußere Oberflächenvergrößerungsmittel (18) angeordnet sind und die Endöffnungen haben;
einen Flüssigkeitszulauf (28), der durch eine Öffnung (22, 24) in einem ersten Endabschnitt (12) des obersten oder des untersten Rohres (4, 6) gebildet wird;
einen Flüssigkeitsablauf (30), der durch eine gegenüber dem Flüssigkeitszulauf angeordnete Öffnung (22, 24) in einem zweiten Endabschnitt (13) des obersten oder des untersten Rohres (4, 6) gebildet wird;
einen Zulaufverteilungskanal (32) für das Verteilen der Flüssigkeit zu den gestapelten Rohren und einen Ablaufsammelkanal für das Sammeln der aus den gestapelten Rohren fließenden Flüssigkeit, wobei der Zulaufverteilungskanal (32) und der Ablaufsammelkanal durch Öffnungen (22, 24) in den genannten ersten und zweiten Endabschnitten (12, 13) der Rohre gebildet werden und wobei die Öffnungen (22, 24) paarweise in einer Linie zueinander angeordnet sind und die Kanten von benachbarten Öffnungen dicht miteinander verbunden sind; und
ein Befestigungsglied (34), welches im Zulauf (28) und im Ablauf (30) angeordnet ist, das genannte Verfahren umfassend die folgende Schritte:
Aufweiten der Endabschnitte (12, 13) der Rohre in Stapelrichtung, wodurch jeder Endabschnitt (12, 13) eine oberes flaches Teilstück (17) und ein unteres flaches Teilstück (19) erhält;
Ausstanzen der Öffnung (22, 24) für den Flüssigkeitszulauf (28) im oberen oder im unteren flachen Teilstück (17, 19) des genannten ersten Endabschnitts (12) und Ausstanzen der Öffnung für den Flüssigkeitsablauf (30) im oberen oder im unteren flachen Teilstück (17, 19) des genannten zweiten Endabschnitts (13);
Ausstanzen der Öffnungen (22, 24) für den Zulaufverteilungskanal (32) und den Ablaufsammelkanal in den oberen und unteren flachen Teilstücken (17, 19) der Endabschnitte (12, 13) der Rohre;
Einsetzen von Verschlußgliedern (20) in die Endöffnungen der Rohre,
wobei das Verschlußglied (20) dadurch gebildet wird, daß ein flacher Endverschlußrohling (76) durch ein Preßwerkzeug (84) in einen durchgehenden Kanal (64) in einem Umformglied (66) gepreßt und auf diese Weise zu einem becherförmigen Endverschluß (20) verformt wird, und wobei der becherförmige Endverschluß dann weiter durch den Kanal (64) und durch die Endöffnung in den Endabschnitt (12, 13) des Rohrs eingedrückt wird, welches in den durchgehenden Kanal des Umformglieds (66) eingesetzt ist;
Stapeln der Rohre übereinander, so daß die Endabschnitte (12, 13) von zwei benachbarten Rohren mit ihren jeweiligen flachen Teilstücken (17, 19) aneinander anliegen;
Anordnen von äußeren Oberflächenvergrößerungsmitteln (18) zwischen den Rohren;
Anordnen des Befestigungsglieds (34) am Flüssigkeitszulauf (28) und am Flüssigkeitsablauf (30);
Fixieren der zum Wärmetauscher gehörenden Komponenten zueinander; und
Verbinden der genannten Komponenten durch Hartlöten.

10. Verfahren nach Anspruch 9, **dadurch gekennzeichnet**, **daß** das Aufweiten der Endabschnitte (12, 13) der Rohre dadurch erfolgt, daß ein Dorn (48) über eine Tiefe, die der gewünschten Länge des Endabschnitts (12, 13) entspricht, in die Endöffnung des Rohrs eingedrückt wird, während ein Spannglied (46) das Rohr in seinem mittleren Abschnitt (14) einspannt.

11. Verfahren nach Anspruch 10, **dadurch gekennzeichnet, daß** der Endabschnitt (12, 13) anschließend durch Verformung einen im wesentlichen rechtwinkligen Querschnitt erhält, indem der genannte Endabschnitt, während der Dorn (48) noch darin eingeführt ist, gleichzeitig von oben, von unten und von beiden Seiten zusammengedrückt wird, wobei der genannte Dorn (48) während des genannten Zusammendrückens des Endabschnitts (12, 13) als Gegenhalter dient.

12. Verfahren nach einem der Ansprüche 9 bis 11, **dadurch gekennzeichnet, daß** der Endabschnitt (12, 13) durch Verformung einen im wesentlichen rechtwinkligen Querschnitt erhält, dessen Höhe größer ist als die Höhe des übrigen Teils des Rohrs und dessen Weite kleiner ist als die Weite des übrigen Teils des Rohrs.

13. Verfahren nach einem der Ansprüche 9 bis 12, **dadurch gekennzeichnet, daß** das Ausstanzen einer ersten der beiden Öffnungen in jedem Endabschnitt für den Zulaufverteilungskanal (32) und den Ablaufsammelkanal erfolgt, indem der Endabschnitt (12, 13) des Rohrs über einen Dorn (52) positioniert wird, der diesen trägt, und die genannte erste Öffnung als Führung für das Ausstanzen der genannten zweiten Öffnung (22, 24) dient.

14. Verfahren nach einem der Ansprüche 9 bis 13, **dadurch gekennzeichnet, daß** die eine der beiden Öffnungen (22, 24) in den Endabschnitten der Rohre für den Zulaufverteilungskanal (32) und den Ablaufsammelkanal mit einem Flansch versehen ist, um eine Führung und Fixierung beim Aufeinanderstapeln der Rohre zu ermöglichen.

## Revendications

1. Échangeur de chaleur comprenant :
- une pile d'échangeur de chaleur (2) constituée par un certain nombre de tubes plats (4, 6, 8) qui sont empilés les uns au-dessus des autres et ont une section transversale pratiquement rectangulaire, des moyens d'augmentation de la surface extérieure (18) étant disposés entre les tubes et des moyens d'augmentation de la surface intérieure (16) étant disposés à l'intérieur des tubes ;
- une arrivée de fluide (28) qui est formée par un trou (22, 24) au niveau d'une première portion terminale (12) de l'un ou l'autre du tube supérieur (4) ou du tube inférieur (6) ;
- une sortie de fluide (30) qui est formée par un trou (22, 24) au niveau d'une deuxième portion terminale (13), située à l'opposé de l'arrivée de fluide (28), de l'un ou l'autre du tube supérieur (4) ou du tube inférieur (6) ;
- un canal de répartition d'arrivée (32) pour répartir le fluide entre les tubes empilés (4, 6, 8), et un canal de collecte de sortie pour recueillir le fluide en provenance des tubes empilés, les canaux de répartition d'arrivée et de collecte de sortie étant formés par des trous (22, 24) au niveau desdites première et deuxième portions terminales (12, 13) des tubes, lesquels trous sont disposés par paires en étant alignés les uns avec les autres, et avec les bords des trous adjacents l'un à l'autre raccordés de manière étanche l'un à l'autre ; et
- un élément de fixation (34) qui est disposé dans l'arrivée (28) et dans la sortie (30) ; dans lequel
- les portions terminales (12, 13) du tube respectif (4, 6, 8) sont plus larges dans la direction d'empilage que la partie restante du tube ;
- les tubes empilés sont appliqués les uns contre les autres le long de leurs portions terminales élargies (12, 13) et sont raccordés les uns aux autres le long de cette portion, les tubes étant situés, sur la partie restante de leur longueur, à une certaine distance les uns des autres dans le but de recevoir les moyens d'augmentation de la surface extérieure (18) ; et
- au moins ces parties (17, 19) desdites portions terminales (12, 13), qui constituent une surface de portée pour un tube voisin, sont planes ;
caractérisé en ce que lesdits tubes sont des tubes entiers ayant des ouvertures terminales et en ce que des fermetures terminales en forme de coupe (20) sont introduites dans lesdites ouvertures terminales avec leurs ouvertures dirigées vers l'extérieur depuis l'ouverture terminale du tube, d'où il résulte que les ouvertures terminales sont fermées.

2. Échangeur de chaleur selon la revendication 1, dans lequel les trous (22, 24), alignés les uns avec les autres pour former le canal de répartition d'arrivée (32) et le canal de collecte de sortie, sont formés dans les portions planes (17, 19) desdites portions terminales (12, 13).

3. Échangeur de chaleur selon la revendication 1 ou la revendication 2, dans lequel les portions terminales élargies (12, 13) d'au moins ces tubes (8), qui sont situés à l'intérieur de la pile de tubes, ont une section transversale pratiquement rectangulaire dont la hauteur est supérieure à la hauteur de la partie restante du tube et dont la largeur est inférieure à la largeur de la partie restante du tube.

4. Échangeur de chaleur selon l'une quelconque des revendications 1 à 3, dans lequel l'un des trous (22, 24), alignés les uns avec les autres au niveau desdites portions terminales (12, 13), a un rebord circonférentiel (26) qui s'étend pratiquement radialement vers l'extérieur depuis le trou pour guidage dans le deuxième des trous (22, 24) situé en ligne avec lui et pour l'y fixer.

5. Échangeur de chaleur selon l'une quelconque des revendications 1 à 4, dans lequel une plaque de renforcement (38) est disposée sur l'extérieur d'une première portion terminale (12) de l'autre tube parmi le tube supérieur (4) et le tube inférieur (6) et sur l'extérieur d'une deuxième portion terminale (13) de l'autre tube parmi le tube supérieur (4) et le tube inférieur (6), lesquelles plaques (38) sont situées respectivement à l'opposé de l'arrivée de fluide (28) et de la sortie de fluide (30).

6. Échangeur de chaleur selon l'une quelconque des revendications 1 à 5, dans lequel l'arrivée de fluide (28) et la sortie de fluide (30) sont situées dans le même tube (4, 6).

7. Échangeur de chaleur selon l'une quelconque des revendications 1 à 6, dans lequel lesdits moyens d'augmentation de la surface extérieure (18) sont également disposés sur le haut et sous la partie restante (14) du tube supérieur (4) et du tube inférieur (6) respectivement.

8. Échangeur de chaleur selon l'une quelconque des revendications 1 à 7, dans lequel le moyen de fixation (34) est introduit dans l'arrivée (28) et la sortie (30) respectives et dans lequel une extrémité de cet élément (34) est pourvue d'une collerette annulaire (36) qui est raccordée à l'extérieur (17, 19) de la première ou de la deuxième portion terminale (12, 13) du tube supérieur (4) ou du tube inférieur (6) et son autre extrémité est disposée dans le canal de répartition d'arrivée (32) et le canal de collecte de sortie.

9. Procédé pour fabriquer un échangeur de chaleur, comprenant :
- une pile d'échangeur de chaleur (2) qui consiste en un certain nombre de tubes plats (4, 6, 8) qui sont empilés les uns au-dessus des autres, en des moyens d'augmentation de la surface extérieure (18) disposés entre les tubes, les tubes ayant des ouvertures terminales ;
- une arrivée de fluide (28) qui est formée par un trou (22, 24) au niveau d'une première portion terminale (12) de l'un des tubes parmi le tube supérieur (4) et le tube inférieur (6) ;
- une sortie de fluide (30) qui est formée par un trou (22, 24) au niveau d'une deuxième portion terminale (13), située à l'opposé de l'arrivée de fluide (28), de l'un des tubes parmi le tube supérieur (4) et le tube inférieur (6) ;
- un canal de répartition d'arrivée (32) pour répartir un fluide entre les tubes empilés, et un canal de collecte de sortie (33) pour recueillir le fluide en provenance des tubes empilés, le canal de répartition d'arrivée (32) et le canal de collecte de sortie (33) étant formés par des trous (22, 24) au niveau desdits première et deuxième portions terminales (12, 13)des tubes, lesquels trous (22, 24) sont disposés par paires en étant alignés les uns avec les autres, et avec les bords de trous adjacents l'un à l'autre raccordés de manière étanche l'un à l'autre ; et
- un élément de fixation (34) disposé dans l'entrée (28) et la sortie (30), ledit procédé comprenant les étapes suivantes :
- élargir les portions terminales (12, 13) des tubes dans la direction de l'empilage, chaque portion terminale (12, 13) comportant une portion supérieure plane (17) et une portion inférieure plane (19) ;
- poinçonner le trou (22, 24) pour former l'arrivée de fluide (28) dans la portion plane supérieure (17) ou la portion plane inférieure (19) de ladite première portion terminale (12), et poinçonner le trou destiné à former la sortie de fluide (30) dans la portion plane supérieure (17) ou la portion plane inférieure (19) de ladite deuxième portion terminale (13) ;
- poinçonner les trous (22, 24) destinés à former le canal de répartition d'arrivée (32) et le canal de collecte de sortie (33) dans les portions planes supérieure et inférieure (17, 19) des portions terminales (12, 13) des tubes ;
- introduire des éléments de fermeture (20) dans les ouvertures terminales des tubes ;
dans lequel l'élément de fermeture (20) est produit au moyen d'un flan plat de fermeture terminale (76) pressé par un outil de presse (84) dans un canal traversant (64) dans un élément de formation (66) et étant configuré de cette manière en une fermeture terminale en forme de coupe (20), et dans lequel la fermeture terminale en forme de coupe étant ensuite poussée plus loin à travers le canal (64) et dans la portion terminale (12, 13) du tube à travers son ouverture terminale, lequel tube a été introduit dans le canal traversant de l'élément de formation ;
- empiler les tubes les uns au-dessus des autres de façon que les portions terminales (12, 13) de deux tubes voisins soient appliquées l'une contre l'autre par l'intermédiaire de leurs portions planes respectives (17, 19) ;
- placer les moyens d'augmentation de la surface extérieure (18) entre les tubes ;
- disposer l'élément de fixation (34) dans l'arrivée de fluide (28) et dans la sortie de fluide (30) ;
- fixer les composants contenus dans l'échangeur de chaleur les uns aux autres ; et
- raccorder lesdits composants les uns aux autres par brasage fort.

10. Procédé selon la revendication 9, dans lequel l'élargissement des portions terminales (12, 13) des tubes est effectué au moyen d'un mandrin (48) poussé dans l'ouverture terminale du tube sur une longueur correspondant à la longueur désirée de la portion terminale (12, 13), tandis qu'un élément de fixation (46) tient le tube fixé au niveau de sa portion médiane (14).

11. Procédé selon la revendication 10, dans lequel la portion terminale (12, 13) est ensuite configurée en une section transversale pratiquement rectangulaire par le fait que ladite portion terminale, pendant que le mandrin (48) est toujours introduit dans elle, est pressée vers l'intérieur simultanément de dessus, de dessous et des deux côtés, ledit mandrin (48) servant de contre-support pendant le serrage vers l'intérieur de la portion terminale (12, 13).

12. Procédé selon l'une quelconque des revendications 9 à 11, dans lequel la portion terminale (12, 13) est configurée en une section transversale rectangulaire dont la hauteur est supérieure à la hauteur de la partie restante du tube et dont la largeur est inférieure à la largeur de la partie restante du tube.

13. Procédé selon l'une quelconque des revendications 11 à 14, dans lequel le poinçonnage d'un premier des deux trous au niveau de chaque portion terminale, pour former le canal de répartition d'arrivée (32) et le canal de collecte de sortie, est effectué avec la portion terminale (12, 13) du tube placée sur un mandrin (52) pour la supporter, et dans lequel ledit premier trou sert de guide pour poinçonner ledit deuxième trou (22, 24).

14. Procédé selon l'une quelconque des revendications 9 à 13, dans lequel l'un des deux trous (22, 24) formé au niveau des portions terminales des tubes pour former le canal de répartition d'arrivée (32) et le canal de collecte de sortie est muni d'un rebord de façon à permettre le guidage et la fixation lors de l'empilage des tubes les uns au-desus des autres.
